Europäisches Patentamt

(19) European Patent Office

Office européen des brevets

(11) Publication number: **0 175 543**
**B1**

(12) **EUROPEAN PATENT SPECIFICATION**

(45) Date of publication of the patent specification:
07.06.89

(51) Int. Cl.⁴: **G01G 3/14, G01G 21/23**

(21) Application number: **85306446.7**

(22) Date of filing: **11.09.85**

(54) **High precision weighing-machine using strain-gauges.**

(30) Priority: **17.09.84 AR 297976**
**07.11.84 AR 298540**
**21.06.85 AR 300769**

(43) Date of publication of application:
**26.03.86 Bulletin 86/13**

(45) Publication of the grant of the patent:
**07.06.89 Bulletin 89/23**

(84) Designated Contracting States:
**AT CH DE FR GB IT LI SE**

(56) References cited:
**DE-A- 2 847 499**
**US-A- 4 361 199**

(73) Proprietor: **Establecimiento Metalurgico Normetal S.A.C.I.F. e I, José Hernández 5548, AR-1605 Munro (Prov. of Buenos Aires)(AR)**

(72) Inventor: **Sinjeokov Andriewsky, Miguel, Sucre 3601, 1430 Buenos Aires(AR)**

(74) Representative: **Spall, Christopher John et al, BARKER, BRETTELL & DUNCAN 138 Hagley Road, Edgbaston Birmingham B16 9PW(GB)**

ACTORUM AG

## Description

The present invention relates to dynamometer machines as well as to extensible compound beams – claims 1, 10 – and particularly to improvements in automatic weighing-machines, wherein a load to be weighed is placed on a platform of the weighing-machine, and a weight indication or read-out independent of the load's relative position thereon may be obtained. The present invention particularly relates to automatic weighing-machines, i.e. those of the dynamometer type giving a read-out automatically upon a load being placed on their platform.

The type of weighing-machine referred to herein, generally comprises a pair of side-by-side symmetrical beams lodged between a frame and a tray or platform, the latter 15 being adapted to receive and support different weight loads. The beams are held in place at each end portion thereof by pairs of essentially vertical coupling members connected to transverse load the beam at each end portion in response to a weight load on the platform; which pairs of coupling members comprise, connected to each end portion of each beam, one member supporting the platform to transmit a load force, and another member similarly resting on the frame to transmit a reactive force dependent on load parameters. These load parameters are weight magnitude and eccentricity; the latter is defined as the position of the load in relation to the platform. The transverse loading of the beams creates bending moments at a middle portion thereof due to the longitudinal offset between the respective coupling points where the coupling members apply the load and the reactive forces to each end portion of the beams.

In particular, the present invention relates to the beams, to the deflection thereof under load, and to avoiding friction during beam movement.

An accurate weight read-out may be obtained regardless of the relative position of the load on the platform of a weighing-machine, i.e. even when the eccentricity of the point of application of the resultant force applied by the load on the platform is great. U.S. patents N⁰ 2,899,191 to Norman Hunt and N⁰ 3,366,189 to Anselme Bellier explain that the sum of the bending moments at the longitudinal centre or middle of each beam may vary only according to the magnitude of the weight, and is independent of the eccentricity of the load on the receiving platform. Thus the middle transverse vertical plane of each symmetrical beam may be considered an invariant sensing position insofar the relative position of the load. Strain- gauges are operatively attached to the beam at its invariant middle position, to detect the deformation resulting from the bending moment thereat. Our Argentine patent N⁰ 216,822 shows means coupling the straight flat (i.e. horizontal along its entire length, including end-portions thereof) beams between the platform and the frame, adequate for transverse loading the beams without substantially subjecting them to other distorting moments.

In these types of weighing-machines, the transfer function relating the weight of the load with the bending moment at the middle of each beam depends on geometrical factors which are generally assumed to be constant, such as the longitudinal component of the distance between the point supporting the platform and the point resting on the frame, at each end of the beam. In this sense, our cited Argentine patent N⁰ 216,822 also shows how a weighing-machine may be manufactured, in which this distance is uniquely determined by the geometry of the beams. However, during different flexures, both these points move unequal trajectories, resulting in that this transfer function varies under different load conditions, giving rise to a so-called "Angle error" which limits the precision of the machine.

Another source of error arises from the effect of horizontal force components, which are disturbing because weight is an inherently vertical vector parameter. Thus, any bending moment components due to non-vertical forces (i.e. horizontal force components) are evidently responsable for errors in the overall weight measurement. As explained more fully hereinafter, horizontal forces are originated by various sources: (a) inclination of the forces transmitted by the coupling members to the beams, with respect to the transverse vertical plane; (b) friction between the beams and the coupling members during flexure, because of relative longitudinal movement between these means; and (c) elasticity of the coupling members as they yield under load. Due to the finite thickness of the beams and the variable deformation of the latter under differing load parameters, these horizontal forces are or become vertically offset and consequently contribute an error factor to the final bending moment at the middle of each beam. This is called the "Bending Moment error". For all these reasons, the resolution of this type of prior art machine is generally limited to less than 1:1,000.

Our Brazilian patent application No PI 8401977 (laid open to public inspection on 4th December 1984) teaches how measuring precision may be vastly improved by featuring beams with V-shaped ends, so that all the coupling points or edges lie in a single horizontal plane, to reduce these Angle and Bending Moment errors in relatively small weighing-machines.

However, because elastic forces are prefered to friction forces, in view of that the latter are responsible for hysteresis, the weighing-machines described in our cited Argentine and Brazilian references also feature coupling members designed to yield with beam flexure, rocking in a small arc as the beam middle moves vertically. When the loads are heavy, an engineering problem arises (in addition to the one regarding excessive deflection of the beam middle as mentioned before) with the coupling members linking the beams respectively to the machine's frame and platform. In particular, when vertical forces on the order of 200 kg or more are to be transmitted by the coupling members, the elastic coupling members shown in our cited Argentine and Brazilian references become inadequate. That is, the relatively simple procedure of cutting out the slots in their structure to provide the required low elasticity coefficient overweakens these members, resulting in that they cannot rock in a small arc before the point of maximum elasticity is surpassed and plastic deformation sets in, and, in practice, these members literally collapse.

Consequently, thick rigid coupling members must be used in heavy duty weighing-machine which, together with the (at least partly flexible) beams, bring the friction and resultant hysteresis affair back into consideration, partially defeating the purpose of the invention disclosed in our previously cited Brazilian reference; when it is attempted to apply that invention as disclosed therein to larger weighing-machines.

According to the present invention, the beams are made elastic in the longitudinal direction. The desired effect of this novel idea is that the beam middle may deflect under load without longitudinally displacing the beam end portions; graphically, when the middle portion 25 curves either upwards or downwards, the beams stretch or contract longitudinally, resulting in that the beam end portions are not urged towards or away from each other because the real length of the beam is free to vary elastically. The immediate consequence of this degree of freedom of movement is that the longitudinal position of the beam end portions remain practically constant while the beam middle moves vertically, and thus it is not necessary for the coupling members to rock therewith to avoid the friction forces. Thus, simple rigid coupling members may be reliably used without producing these friction forces. Furthermore, the longitudinal elasticity absorbs the work of the undesired longitudinal forces, storing it as potential energy, before it stresses the beam.

In a preferred embodiment, suitable for larger weighing-machines, the beams are composite in structure comprising a pair of longitudinally extending rigid members overlapping each other at the beam middle portion. Each rigid member integrally contains a respective beam end portion which may be a flat or V-shaped end-plate, preferably the latter. The two rigid members are interconnected by links which cause them to move integrally with each other in the vertical direction when subjected to vertical forces (i. e. weight), but allowing freedom of relative movement in the horizontal longitudinal direction. This freedom of movement permits the pair of rigid members to "slide" along each other under the effect of horizontal forces, to absorb the work (stored as elastic potential energy) of the horizontal forces and avoid them generating detectable error strains in the beams. More importantly, this "sliding" motion between the pair of rigid members causes the effect of lengthening the beam when the curvature of the middle portion increases with deflection, to compensate for the two end portions keeping their original longitudinal position. Strain-gauges are operatively attached at two sensing positions, located one on each end-plate and equidistant from the invariant beam middle position, in a manner to provide an output signal independent of load eccentricity.

In a preferred embodiment for small and intermediate size weighing-machines, each compound beam structure comprises two end-to-end rigid members bridged by a flexible elongated middle plate. The latter carries the strain-gauges which are located at the invariant beam middle position; the middle-plate is also separately coupled to both the rigid members by the links in a way that allows relative movement in the longitudinal direction while substantially integrating movement in the vertical direction. The beam end portions are fixed to a corresponding rigid member.

Figure 1 is a tri-dimensional schematic of a weighing-machine viewed in perspective, of the type addressed by the present invention, shown with full lines when in an unloaded state, and in dashed lines when in a finite (i. e. non-zero) state.

Figure 2 is a longitudinal cross-section in a vertical xz-plane, of a prior art weighing-machine, such as the Brazilian reference discloses, depicted in a state of finite load.

Figure 3A is a schematic of a straight beam viewed in a longitudinal vertical plane, illustrating how horizontal forces may be transmitted by the coupling members.

Figure 3B is a magnification of one of the coupling points of the beam of figure 3A, showing with more clarity the actual direction of a load force, and how the latter resolves to finite horizontal and vertical components.

Figures 4A and 4B show how friction forces are generated in operation, to illustrate why hysteresis is originated due to their dependency on beam deflection direction.

Figures 5A and 5B depict an end portion of a flat straight and of a V-shaped types of beam respectively, illustrating the origin of the Bending Moment error, and how it decreases when the end-portions are inclined as in figure 5B.

Figures 6A and 6B schematically show, for the same types of beams depicted in figures 5A and 5B respectively, the beam end portion and its movement during beam deflection, showing the locus of a coupling point, to teach the origin of the Angle error, and how it is reduced in figure 6B.

Figure 7 shows a bending moment diagram justifying the location of a strain-gauge pair away from the exact middle section of a beam of the invention.

Figure 8 is a side view (in the xz-plane) of one of the long beams of the present invention with its associated rigid coupling members, according to an embodiment of the 15 present invention, i. e. a beam both vertically rigid and longitudinally elastic.

Figures 9 and 10 are transversal cross-sections taken through yz-planes IX-IX and X-X respectively in figure 8.

Figures 11, 12A and 12B schematically illustrate in a rather exaggerated but graphic manner, how the beam in figure 8 deforms longitudinally, to neutralize the effects of the horizontal forces.

Figure 13 is a side view (in the xz-plane) of one of the beams of the weighing-machine, according yet to another embodiment of the present invention incorporating both said main features.

Figure 14 is a longitudinal cross-section taken through a split xy-plane in figure 13.

Figures 15A and 15B schematically illustrate in a rather exaggerated but graphic manner, how the beam in figure 13 deforms longitudinally, to neutralize the effects of the horizontal forces.

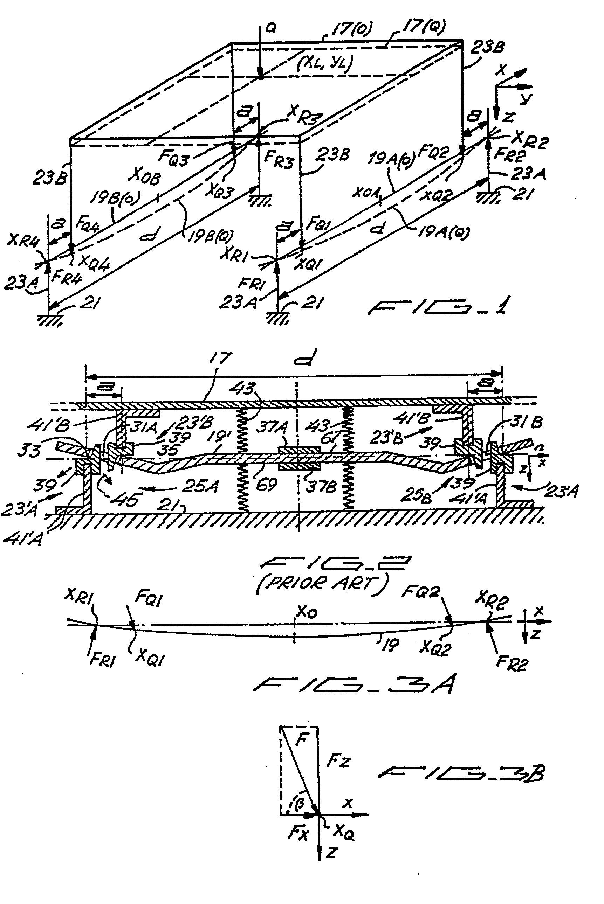

Making reference to figure 1 of the drawings, a weighing-machine is shown schematically, including a platform or tray 17, which may move vertically from its unloaded position indicated by a reference symbol 17(O) to a loaded position 17(Q). A force $\bar{Q}$ represents the weight or force exerted by a load at a coordinate point $(X_L, Y_L)$ of the platform 17. Point $(X_L, Y_L)$ could well be located anywhere along tray 17, and in general there will be a multiplicity of forces $\bar{Q}$ distributed on tray 17; however, their effect on the overall weight measurement is simply the summation of their individual effects.

The platform 17 is suitably coupled to a pair of horizontal beams 19A, 19B so as to apply four vertically downward forces $\bar{F}_{Q1}$, $\bar{F}_{Q2}$, $\bar{F}_{Q3}$, $\bar{F}_{Q4}$ at the application or coupling points $X_{Q1}$, $X_{Q2}$, $X_{Q3}$, $X_{Q4}$, respectively. In turn, beams 19A, 19B have four coupling points $X_{R1}$, $X_{R2}$, $X_{R3}$, $X_{R4}$ resting on a base or frame 21 (not illustrated in figure 1), to which it is coupled and supported thereby. This resting or supporting action is indicated by upward reactions $\bar{F}_{R1}$, $\bar{F}_{R2}$, $\bar{F}_{R3}$, $\bar{F}_{R4}$, which react to load forces $\bar{F}_{Q1}$, $\bar{F}_{Q2}$, $\bar{F}_{Q3}$, $\bar{F}_{Q4}$. The reference numerals 23A, 23B indicate the location of coupling means (not illustrated in detail in fig. 1) which transmit the load forces and reactions $\bar{F}$ to the beams 19.

The coupling rest points $X_R$ on each beam 19 (when generalizing, the subscripts A, B, etc. or 1, 2, etc. are omitted from the reference numerals, e.g. beams 19A, 19B are referred to as 19, etc.) are spaced apart by a distance $\underline{d}$. Rest point $X_{R1}$ is separated from its partner supporting point $X_{Q1}$ by distance $\underline{a}$, whilst points $X_{R2}$, $X_{R3}$, $X_{R4}$ are likewise separated respectively from partner points $X_{Q2}$, $X_{Q3}$, $X_{Q4}$ equal distances $\underline{a}$. It can be shown that at a middle point $X_O$ of beam 19A, from which rest points $X_R$ are equidistant (and obviously application points $X_Q$ likewise), the bending movement $M_O$ is:

$$M_O = \tfrac{1}{2}\,(F_{Q1} + F_{Q2})\,a \quad (1)$$

which is independent of the relative longitudinal position $X_L$ of the load $\bar{Q}$ on platform 17, for which reason middle point $X_O$ is also defined as the invariant point. The same obviously applies to sister beam 19B, substituting with magnitudes $F_{Q3}$ and $F_{Q4}$ in eq. (1). The distance $\underline{a}$ may be considered as the length of the lever-arm that generates moment $M_O$. As detailed further on, strain-gauges are coupled to the beams 19 to detect the longitudinal elongation precisely at their respective invariant or middle point $X_O$, resulting from the bending moment $M_O$.

Cartesian coordinates are used in the present description to specify axis and directions as illustrated. The x-axis extends in the longitudinal horizontal direction, the y-axis in the transverse horizontal direction and the z-axis in the transverse vertical direction, the x-, y- and z- axes being mutually orthogonal. Consequently, $\underline{xy}$ is a horizontal plane, $\underline{xz}$ a longitudinal vertical plane, and $\underline{yz}$ a transverse vertical plane.

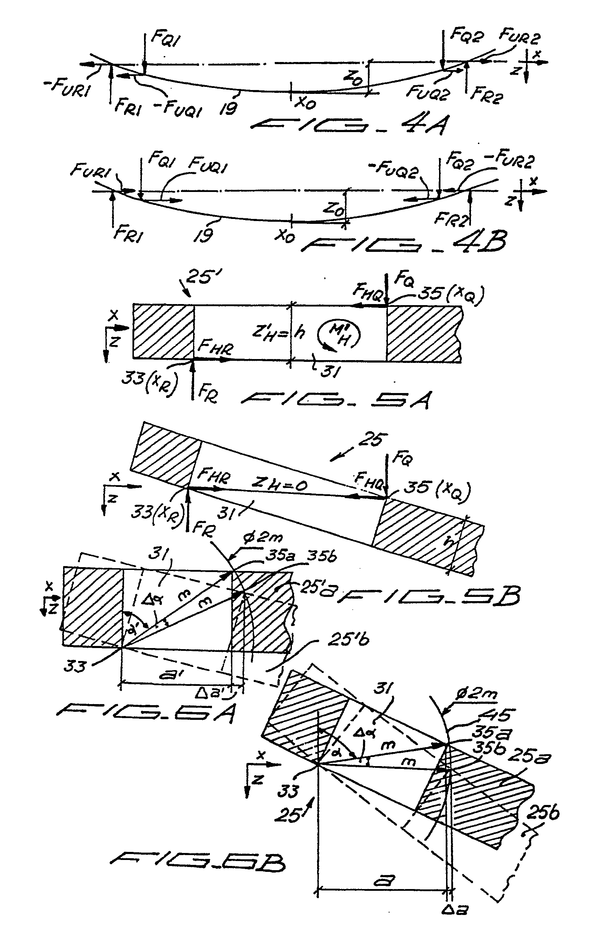

Figure 2 is a vertical cross-section taken along the longitudinal axis $\underline{x}$ of a prior art short flexible beams 19' of a weighing machine (vide, e. g., the cited Brazilian reference), actually depicted in a state of finite load. This weighing-machine comprises the plate, tray or platform 17 and the frame 21; the platform 17 is adapted to eventually receive a load Q (figure 1) within a desired weight range. A pair of beams 19' (only one beam 19' is visible in fig. 2) is lodged between frame 21 and platform 17 by elastic coupling members 23'A, 23'B. Beam 19' is elongated in the direction of longitudinal axix $\underline{x}$ and comprises two end portions 25A, 25B flanking a flexible middle portion 27'. Each end portion 25 features an orifice 31 which has two opposite walls or sides which define a pair of straight edges 33, 35 on the under- and topside respectively of beam 19'. Both edges 33, 35 are perpendicular to axis $\underline{x}$ and are spaced apart from one another by distance $\underline{a}$, which may be 15 mm in a beam (d=) 220 mm long. A pair of strain-gauges 37 are attached to the very middle $X_O$ (i.e. equidistant from the orifices 31 of end portions 25) of beam 19', to sense longitudinal elongations caused by beam stress resulting from the bending moment $M_O$ under the load $\bar{Q}$ on platform 17.

Each orifice 31 receives a pair of the coupling members 23'. Each upper member 23'B allows the platform 17 to rest on beam 19' and to transmit a force $\bar{F}_Q$ depending on the position and weight of the load $\bar{Q}$ thereon; on the other hand, each lower member 23'A provides support for beam 19' and a reaction $\bar{F}_R$ to the forces $\bar{F}_Q$. Members 23 include two plate members 39, 41' each, one plate member 39 lying in the xz-plane being for contact coupling to the corresponding beam 19' at edges 33, 35 of the latter. The lower members 23'A further comprise plate members 41'A welded to the frame 21; whilst the upper members 23'B further comprise plate members 41'B welded to the platform 17; these plate members 41' lying in transverse yz-planes. The L-shaped members 41' are sufficiently elastic so as to rock with beam deflection; in this way, contact plates 39 may move in an arc 45 and thus avoid having the edges 33, 35 scrape therealong during beam motion.

There are also springs 43 connected between the frame 21 and the platform 17, to avoid the latter becoming accidentally separated from the rest of the machine and to keep the beams 19' in place.

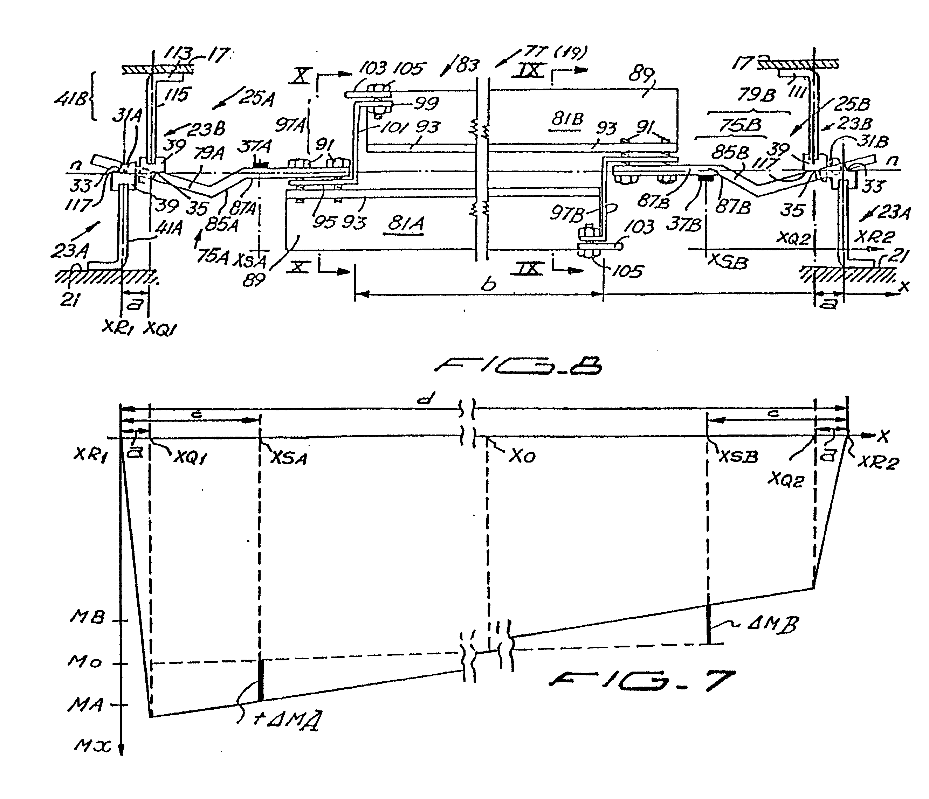

Before describing in detail the nature of the invention and the preferred embodiments for the beam structures 19 in fig. 1 according to the nature of the present invention, the factors that limit or downgrade precision of these types of weighing-machines are now brought forward, also making reference to improvements shown in the Brazilian reference heretofore cited, in order to give a clearer picture of the state of the art; starting with the nature of the interfering horizontal forces $F_H$, which is now explained with the assistance of figs. 3A and 3B to begin with. Fig. 3A schematically shown an xz-plane containing one of the beam structures 19 transversely loaded by forces $F_{Q1}$, $F_{Q2}$, $F_{R1}$, $F_{R2}$, (in general $F_Q$, $F_R$, respectively, or, more generally, just $F$) at respective coupling points $X_{Q1}$, $X_{Q2}$, $X_{R1}$, $X_{R2}$. It is practically impossible to avoid slight inclinations of the coupling members 23, which inclinations cause the vertical lines of action of each force $F$, transmitted from the platform 17 (or likewise frame 21) to the coupling member 23 and from the same to the beam structure 19 at application points $X_Q$ (and $X_R$), to have longitudinal projections, which in practice derives in that the forces $F$ are in actual fact generally inclined in the xz-plane, forming an angle $\beta$ with respect to the z-direction, as illustrated in fig. 3B.

This figure shows a magnification of the action of a force $F$ on the beam 19 at coupling point $X_Q$ (this is also applicable to rest points $X_R$). Due to the inclination of $F$, the latter resolves into a vertical component $F_Z$ and a horizontal component $F_X$. The vertical component $F$ is the true contribution of the weight $Q$ of the load on the platform 17. Because

$$\beta \approx 90^{\underline{o}} \implies |F_Z| \simeq |F| \qquad (2),$$

no distinction is generally made herein between $LF$ and $F_Z$.

The horizontal component or force $F_X$ is a potentially disturbing factor because, although it is dependent on the load Q, its relationship therewith may not be unequivocally calculated in practice. Its magnitude is obviously given by:

$$|F_X| = |F| \cotan \beta \qquad (3)$$

All the forces $F$, whether load forces $F_Q$ applied to points $X_Q$ or reactions $F_R$ applied to points $R$, resolve to horizontal components $F_X$ and contribute erroneous horizontal forces $F_H$, and to true vertical components $F_Z$.

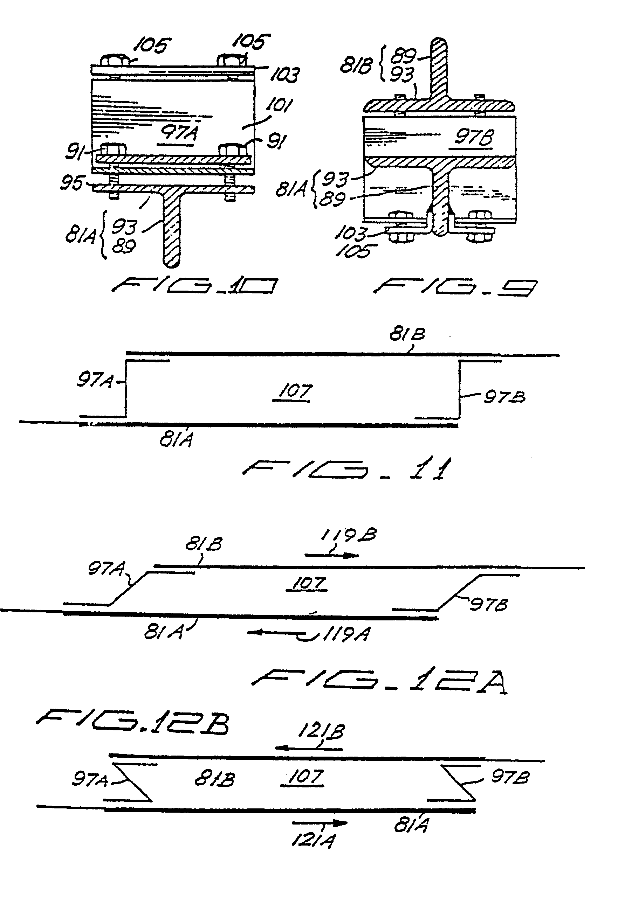

In the prior art, further contributions to the horizontal forces $F_H$ can be made by friction forces $F_U$, originating between the beams 19 and the coupling members during deflection of the former, as depicted in figs. 4A and 4B. Both these figures show friction forces $F_{UQ1}$, $F_{UQ2}$, $F_{UR1}$, $F_{UR2}$ deriving from the load and reactive forces F due to relative sliding movement between the beams and the coupling members. It may be appreciated that this relative sliding moment is generally horizontal so that the friction forces $F_U$ may be considered as horizontal forces $F_H$, and, furthermore, that the friction action increases with the rigidness of the coupling members.

Furthermore, the orientation of the horizontal friction forces $F_U$ depends on the direction in which the beam 19 is moving vertically, i.e.

$$F_U = \pm i\mu F_Z \qquad (4)$$

because when the vertical movement of the beam 19 changes direction, the beam 19 slides the other way along the face of the coupling members 23 ($\mu$ is the friction coefficient, $i$ denotes perpendicularity between cause $F_Z$ and effect $F_U$). In this regard, fig. 4A shows the friction force vectors $F_U$ when the beam 19 is moving downwards

$$(speed\ \dot{z} > 0),$$

and fig. 4B when it is moving upwards

$$(\dot{z} < 0).$$

As a consequence of the change of direction of the friction forces $F_U$, the deflection $z_O$ at the middle $X_O$ of the beam 19 for a given load Q differs for upscale and downscale measurements.

As it is necessary for the beams 19' to be elastic in the vertical z-direction, the loaded beams will oscillate (i.e. descend and ascend alternately), and succesively invert the direction of the friction forces $\bar{F}_U$ before settling in its stable state, for which reason the output signal will also be subjected to hysteresis.

The coupling members 23' can be made sufficiently flexible to generate elastic displacements without the elastic beams 19' sliding along the coupling members 23'. In this case, the hysteresis disappears because, although horizontal forces $\bar{F}_H$ remain, they do not suffer the orientation inversion of the friction forces $\bar{F}_U$, shown in figs. 4A and 4B. If the coupling members 23' are made to yield with beam motion, they behave like a spring having a constant $\underline{k}$ which is relatively low, in comparison with the friction coefficient $\underline{\mu}$ at the coupling points $X_Q$, $X_R$. When the beams 19' deflect, the coupling member 23' will yield a distance $\underline{x}$ in the longitudinal direction and oppose a horizontal elasticity force $\bar{F}_K$ having a magnitude of $F_K = k.x$ (5) which force $\bar{F}_K$ contributes to the total horizontal forces $F_H$.

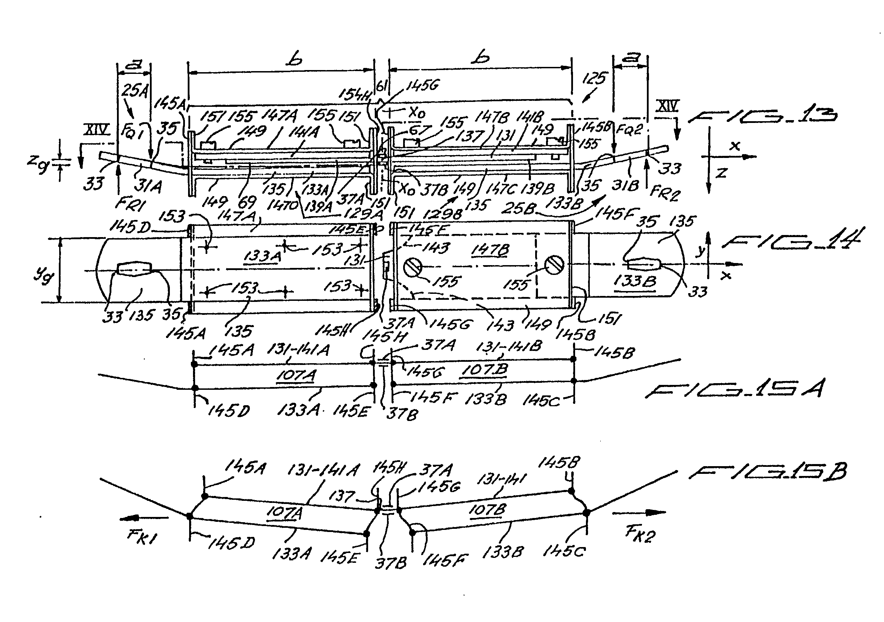

Figure 5A illustrates an end portion 25' of a horizontal beam (vide, e. g., Argentine patent N° 216,822) to show how these horizontal force components $\bar{F}_H$ produce an error moment

$$\dot{M}_H'.$$

.For ease of comparitiveness, like reference numerals and variable symbols are used to state both the horizontal- and the inclined-type end-portion cases, distinguished by a prime symbol (') suffixed in the different horizontal-type's case.

Figure 5A shows load and reactive forces $\bar{F}_Q$, $\bar{F}_R$ applied at respective application points $X_Q$, $X_R$ located on an inclined beam end portion 25'. The application points $X_Q$, $X_R$ naturally correspond to the coupling edges 35, 33 in the beam end portions 25, 25'. When describing the physical structure of the beams, the exact term "edges" is used; however, when explaining a principle, the term "points" is preferred herein for illustrativeness. According to what has been explained beforehand, corresponding horizontal forces $\bar{F}_{HQ}$, $\bar{F}_{HR}$, develop at each coupling point $X_Q$, $X_R$ which, due to the position of the latter and the finite thickness $\underline{h}$ of the beam end portions 25', are vertically, offset the distance $z_H = h$.

The horizontal forces $\bar{P}_{HQ}$, $\bar{F}_{HR}$ that develop at each coupling point $X_Q$, $X_R$, in they become vertically offset a distance $Z_H$, produce each a Bending Moment error magnitude $M_H$ equal to

$$M_H = F_H \cdot z_H / 2 \tag{6}$$

$$= (F_X \pm F_U) \cdot z_H / 2 = (\pm \mu + \cotan \beta) F_Z \cdot z_H / 2 \tag{6'}$$

in the bending moment $M_O$ picked up by the strain-gauges 37.

If elasticity of the coupling members 23' is also taken into account, the bending moment component $M_O$ detected by the strain-gauges 37 depends on different types of variables, such as $\underline{\beta}$, $\underline{k}$ und $\underline{\mu}$, apart from the true vertical forces $F_Z$ dependent on the load Q.

The improvement on the Moment error $M_H$ conveyed by the inclined end portion 25 can be seen in fig. 5B. Due to the inclination of the end portion 25, the pair of horizontal forces $\bar{F}_{HQ}$, $\bar{F}_{HR}$ are now aligned, which annuls the distance factor $z_H$ and makes the error moment $M_H$ in eq. (6) tend to zero, i.e. for a finite non-zero beam thickness $\underline{h}$:

$$\left. M_H = F_H \cdot z_H / 2 \right|_{z_H = 0} = 0 \tag{6''}$$

Furthermore, the V-shape feature of the beam 19' shown in fig. 2 aligns the coupling points $X_Q$, $X_R$ with the neutral axis $\underline{n}$ of the beam to avoid any resultant of the horizontal forces $\bar{F}_H$ at either end 25 producing further Bending Moment error $M_H$ components. Consequently, the bending moment $M_O$ detected by the strain-gauges 37 depends more on only one type of variable, this being the true vertical forces $\bar{F}_V$, dependent on the load Q.

6

Naturally, the moment error $M_H$ cannot be zero for any load state, because the beam must deflect under different loads $\bar{Q}$ and bending moments M to produce distinguishable strain variations picked-up by the sensing means 37. In actual fact, the coupling points $X_Q$, $X_R$ and the neutral axis $\underline{n}$ will only be aligned for just one specific load state. It is preferable that the latter does not correspond to the unloaded ( Q = 0) state, but rather to some desired finite (i.e. non-zero) state, which may correspond to a nominal, a mean, or a maximum load $Q_M$, for which reason this alignment is provided with an initial offset.

The distorting variation of the load weight/bending moment $Q/M_0$ transfer function is now described with the assistance of fig. 6A. This figure shows the horizontal end- portion 25' of a prior art beam (such as shown in the Argentine reference cited herein) in its unloaded state (identified by suffix $\underline{a}$ to reference numeral 25'a), and the same beam end portion is shown in dashed line 25'b positioned in a finite loaded state (likewise, identified by suffix $\underline{b}$). Let the reactive application point $X_R$ be a fixed reference point, in which case the load application point $X_Q$ will move from its initial position at $X_{Qa}$ to loaded position at $X_{Qa}$ along an arc 45 of a circumference of radius $\underline{m}$. The factor $\underline{a}$ in the transfer function $M_0/F$ (vide eq. 1) is the longitudinal component of the constant distance $\underline{m}$ between application points $X_Q$, $X_R$. Because the end-portion 25' is straight and flat (i. e. horizontal over its entire length), the distance vector $\underline{\bar{m}}$ is inclined, forming an angle $\alpha'$ with the vertical. Whilst the value $\underline{m}$ is practically constant, its horizontal projection a + Ga varies with beam flexure, generating the following Angle error:

$$\frac{\triangle a'}{a'} = \frac{\text{sen } (\alpha' + \triangle\alpha) - \text{sen } \alpha'}{\text{sen } \alpha'} \qquad (7)$$

For this reason, it is desirable, as shown in our cited Brazilian reference, for the end-portions 25 to be longitudinally inclined, permanently bent into a V-shaped profile, so that the edges 33, 35 of both orifices 31 of each beam 19 which connect with the coupling members 23' lie in a single horizontal plane $\underline{xy}$. As so mentioned, because the different bendings of the beam at different loads tend to offset the edges 33, 35 from this plane, an initial offset (not illustrated in figure 2) is provided when the machine is unloaded, so that the edges 33, 35 become coplanar under some desired or finite load (as depicted in figure 2).

Figure 6B shows the situation in the case of the beam with adequately inclined end-portions 25 in the same way fig. 6A shows the horizontal end-portion 25' situation. The coupling edges 33, 35 of beam end portion 25 are separated a segment of length $\underline{m}$ which is arranged to be substantially horizontal for a given loaded state, i.e. forming an angle $\alpha$ = 90 with the vertical, due to the V-shape ends of the beams 19. Thus evidently

$$a = m = \text{constant} \quad \Big| \qquad\qquad (8)$$
$$\Big| \quad \alpha = 90$$
$$\Big| \quad \triangle\alpha = 0$$

The above expression (8) forms the principle by which the Angle error is eliminated to give a constant transfer function. Mathematically, using eq. (7) and substituting $\alpha'$ for $\alpha$ to calculate the right-hand side, the resulting improvement may be summarized by:

$$\frac{\triangle a'}{a'} \Big| \quad\quad << \quad \frac{\triangle a}{a} \Big| \qquad\qquad (9)$$
$$\Big| \alpha' \neq 90 \qquad\qquad\Big| \alpha = 90$$

for a given G$\alpha$.

In any case, it is patently evident from figs. 6A and 6B that $\triangle a << \triangle a'$; thus the instantaneous factor a +$\triangle$a in the $M_0/Q$ transfer function is nearly invariable as a consequence of the beams having inclined end portions 25, provided the effect of $\triangle\alpha$ may be validly neglected. In both these figures, the z-direction is magnified in relation to the x-direction, for the sake of making a clearer picture. The improved Angle error can be justified by looking at fig. 6B, where, if point $X_R$ is the fixed reference, then point $X_Q$

pivots around it an angle $\Delta\alpha$ during deflection, from $X_{Qa}$ to $X_{Qb}$. If $\alpha = 90^\circ$, the infinitessimal locus arc described by point $X_Q$ is vertical, leaving the horizontal component $\underline{a}$ unchanged.

Summarizing, the alignment of the application points $X_Q$, $X_R$ (fig. 1) of the load and reactive forces $\bar{F}_Q$, $\bar{F}_R$ along a single horizontal x-axis or xy-plane, contributes to considerably improve the precision of the weight measurement.

As is already known in the art, a load force $\bar{F}$ produces a displacement $z_0$ in the middle $X_0$ of the beam 19' proportional to the square of the beam length $\underline{d}$, according to the following expression:

$$z_0 = \frac{Fd^2a}{8EI}\left(1 - \frac{4a^2}{3d^2}\right) \simeq \frac{Fd^2a}{8EI} \qquad (10)$$

where I is the moment of inertia and E the longitudinal elasticity or Young's modulus.

In the present invention, each beam 19 has a middle portion 83 considerably more rigid, at least along most of its length d, than the middle portion 27' of the beam 19' in fig. 2 which is vertically elastic along its entire length $\underline{d}$. It is desirable that the neutral axis $\underline{n}$ of this portion be contained in the same horizontal plane in which the coupling edges 33, 35 lie, especially when the weighingmachine is loaded. Thus, the denominator of the preceding equation may be increased, as the greater rigidness of the beam increases the inertia moment I.

Turning to another aspect of the present invention, usually, two strain-gauges 37 are used for each beam 19, so that one strain-gauge 37A detects compressive strain and the other strain-gauge 37B tensile strain. Heretofore, the strain-gauges 37 have been normally coupled at the exact middle $X_0$ of each beam 19; however, the present invention also suggests that the gauges 37 may be coupled at areas $X_S$ some distance along the beam 19 away from the middle $X_0$, provided a symmetry condition prevails as discussed hereinafter.

The strain-gauge connecting areas $X_{SA}$, $X_{SB}$ must be precisely predetermined. Referring to figure 7, it will be shown that there must be an exact left-right symmetry with respect to the middle transverse plane containing middle point $X_0$. Figure 7 shows a diagram of bending moments along the longitudinal axis x of the beams 19. Between the inner coupling points $X_Q$, the moment $M_X$ follows the lineal function:

$$M_x = F_{R1} \cdot x - F_{Q1} \cdot (x - a) \qquad (11)$$

The moment $M_0$ at the middle or invariant point $X_0$ is constant for a given load Q, for which reason it can be seen that if the strain-gauge 37 connection points $X_{SA}$, $X_{SB}$ are symmetrical about $X_0$, then the sum $M_A + M_B$ of the respective bending moments $M_A$, $M_B$ at connecting points $X_{SA}$, $X_{SB}$ is always twice $M_0$ (in fig. 7, $+\Delta M_A = -\Delta M_B$), i. e. a constant function of $|Q|$, so the detected value $M_A + M_B$ is also independent of the longitudinal eccentricity of the load Q (fig. 1).

Consequently, weight $|Q|$ may be measured by taking bending moments $M_x$ at symmetrical points $X_{SA}$, $X_{SB}$ about the middle $X_0$. That is, in the same way as the coupling edges 33, 35 must be equally spaced at a distance $\underline{a}$ in both end portions 25, both mechanical connecting points $X_S$ must be separated an identical distance $\underline{c}$ from its nearest orifice 31.

As stated previously, it is impractical to use the elastic coupling members 23' for larger loads. To avoid the problems that the invention in the cited Brazilian reference attempts to overcome, the present invention suggests a novel compound structure for each beam, as shown in figure 8. The weighing-machine comprises the tray or platform 17 and the frame 21; the platform 17 is adapted to eventually receive a load Q (figure 1) within a desired weight range. A pair of compound beams 77 is lodged between the frame 21 and the platform 17 by two sets of four rigid coupling members 23A, 23B, each (only two members 23 of each set and one beam 77 are visible in fig. 8) The lower set comprises members 23A fixed to the frame 21, and the upper set members 23B fixed under the platform 17. The present invention is concerned with eliminating friction between beams 19, 77 and coupling members 23; which friction our cited Brazilian reference eliminates with elastic coupling members 23' (fig. 2) such that $kx \ll \mu F$. As this condition may not be met with rigid coupling members 23, the present invention incorporates the elasticity function eq. (5) into the compound beams 77, to minimize friction without subjecting either the coupling members 23 or the beams 19, 77 to collapsation danger under heavier loads $\bar{Q}$.

Beam 77 is elongated in the direction of the longitudinal x-axis and corresponds to one beam 19 schematically shown in fig. 1. It comprises two endplates 79A, 79B and a pair of interconnected rigid members 81A, 81B vertically spaced from each other; the latter are comprised by two T-section profiles 81 located one above the other and form a beam middle portion 83. On each endplate 79 there is defined an outer beam end portion 25A, 25B and an inner beam intermediate portion 75A, 75B flanking the middle portion 83 of each compound beam 77.

Each end portion 25 features the orifice 31 with two opposite walls which define the pair of straight edges 33, 35 on the under- and top-side respectively of beam 77. Both edges 33, 35 are perpendicular to the x-axis and are spaced apart from one another by an exact distance $\underline{a}$, which may be 15 mm in a beam (d=) 2 m long. The uniformity of the value $\underline{a}$ is critical for each beam 77; consequently, the four endplates 79 are stamped with the same mould.

Two inclined faces 25, 85 and a third horizontal face 87 may be distinguished in each endplate 79, the two faces 25, 85 forming an open V at the outermost part thereof. The intermediate portion 75 is considered as comprising the innermost inclined face 85 and the horizontal face 87 and its most important feature is its flexibility which provides detectable strains according to the load $\bar{Q}$. It should be understood that the V-shapes 25, 85 are not indispensable for the compound-beam feature, and, theoretically, the latter may be applied to flat planar beams such as those disclosed in U. S. patents 2,899,191 and 3,366,189 and in Argentine patent 216,822. In practice, however, it is desirable for the compound beam 77 to have V-shaped ends 25, 85 for improved precision: the compound feature providing longitudinal elasticity for neutralizing horizontal forces $\bar{F}_H$ and the V-shape feature for descaling the Angle error in the load/strain transfer function.

Each profile 81 extends in the longitudinal x-direction, and has a web 89 located in the vertical xz-plane to strengthen the beam middle portion 83 and, thus reduce the deflection of the middle-point $X_O$ (fig. 1) of the beam 77 according to the formula in eq. (10) stated hereinbefore.

The profiles 81 are integrally secured, one to one, to the innermost face 87 of endplates 79, by bolts 91 screwed into flanges 93 of each profile 81. The same bolts 91 also clamp in place a horizontal bit 95 of one end of a thin link piece 97, sandwiching it between the two thicker members 87, 93.

Each beam 77 of the weighing-machine includes two articulated link pieces 97A, 97B, each formed from a steel plate bent into a zig-zag, thus defining two fixing horizontal extreme bits 95, 99, a flexible vertical middle bit 101, and two internal alternate right angles

$$\overbrace{95\text{--}101}$$

and

$$\overbrace{101\text{--}99}.$$

The opposite horizontal bit 99 of the link 97A is secured to an ear 103 fixed to the other profile 81B by a bolt and nut set 105. The flexible bits 101 of the pair of links 97A, 97B are arranged as the opposite sides of a rectangle 107 (figs. 12), the other sides of which are formed by the pair of profiles 81A, 81B. In figures 9, 10 and 11, the means interconnected by bolts 91, 105 are shown loosely connected just for the sake of clarity; it should be understood that the bolts 91, 105 are driven in tightly, securely clamping the connected elements to each other.

Similarly, the link 97B connects the other end of the profile 81A with the integrated component formed by the other profile 81B and the endplate 79B, so that the profile 81A has approximately longitudinal freedom of movement in respect to its pair 81B and viceversa, due to that the thin vertical linkage faces 101 provide freedom of bulge to both links 79.

Figure 10 assists in clarifying the arrangement of the links 97 and how they are connected to the rest of the compound beam 77 of the present invention. It is desirable that the neutral axis $\underline{n}$ be contained in the same horizontal plane in which the coupling edges 33, 35 lie, especially when the weighing-machine is loaded.

The pair of strain-gauges 37 are attached to each beam 77 at the predefined intermediate portions 75 thereof, equidistant about the middle $X_O$, to sense longitudinal elongations caused by beam stress in relation to the load on platform 17, according to eq. (1). A special oven-cured epoxy adhesive is used between strain-gauges 37 and beam 77 to assure good mechanical coupling. The four strain-gauges 37 (two from each beam 77) are electrically connected into a Wheatstone bridge, as is known in the art, to obtain a reading of the weight |Q|. As mentioned before, the intermediate portions 75 are flexible, to enhance the sensitivity of the strain-gauges 37 operatively attached thereto.

Preferably, two strain-gauges 37 are used for each beam 77, one strain-gauge 37A being fixed to the upper face of one of the flexible parts 75A of the beam 77, whilst the second strain-gauge 37B is fixed to the underface of the opposite flexible part 75B, so that the first strain-gauge 37A detects compressive strain and the other strain-gauge 37B tensile strain, as discussed already. Likewise, the strain-gauge connecting areas $X_{SA}$, $X_{SB}$ must be precisely predetermined according to figure 7, and they may be connected either to the horizontal faces 87 or to the inclined faces 85.

Each orifice 31 receives a pair of the rigid coupling members 23. Each member 23B of the upper set allows the platform 17 to rest on beam 77 and to transmit a force $F_Q$ depending on the longitudinal position $X_L$ and weight |Q| of the load Q; on the other hand, each member 23A of the lower set provides support for beam 77 and a reaction $\bar{F}_R$ to the 20 forces $F_Q$.

The member 23 includes two plate members 39, 41 joined to each other. The plate member 41 is a thick common plate made of SAE 1010 iron bent into an L-shape to form a base portion 113 and a side portion 115. The base portion 113 is welded to either the frame 21 or platform 17 as the case may be. The member 39 is also a plate member, adapted to receive the side portion 115 of the L-shaped member 41 in a transverse position. The shape of member 39 is adapted to penetrate orifice 31, and it defines a horizontal face 117 for contact with one coupling edge 33, 35 of orifice 31. The member 39 is made from SAE 1070 steel and is then tempered to ensure hardness. Edges 33 and 35 in fig. 8 respectively identify points $X_R$ and $X_Q$ in fig. 1.

Its best advantages lie in its simplicity of construction, and in the fact that the distance $a$ is directly determined by the longitudinal dimension of the orifices 31. Thus, no special precautions and adjustments are necessary when fixing the base plates 113 of the coupling members 23 to the frame 21 and to the platform 17.

When the weighing-machine is loaded, the beam 77 is urged by load forces $\bar{F}_Q$ and reactions $\bar{F}_R$, thereby generating bending moments $M_x$ in the successive sections along the beam 77. The visible effect of the load on the endplates 79 is to show a closing of the V defined by the inclined faces 25, 85, generating strains in the outer fibres of the flexible face 87 which are picked up by the strain-gauges 37.

Referring also to the schematical figs. 11, 12A and 12B, the horizontal forces $\bar{F}_H$ which inevitably appear applied at the edges 33, 35 normally urge the corresponding profile 81 integral therewith, resulting in that the two profiles 81A, 81B move in the longitudinal x-direction relative to each other, as opposite sides of parallelogram 107, deforming the otherwise 90° alternate angles 95-101 and 101-99. The deformation of the links 97 appears as a rotation of their central bits 101 in either clockwise or counterclockwise direction, according to the partial resultants of the horizontal forces $\bar{F}_H$ at either end 25 of the beam 77.

Figure 11, schematically shows the position of the members 81 and of the links 97 in an unloaded weighing-machine, whilst figures 12A and 12B show a rather exaggerated (for clarity sake) resultant position when the horizontal forces $\bar{F}_H$, are applied to the middle portion 83 of the beam 77, according to whether the horizontal forces $\bar{F}_H$ act on each end to pull or push respectively the middle portion 83, as indicated by arrows 119A, 119B (fig. 12A), 121A, 121B (Fig. 12B). In other words, the links 97 will rotate in a direction depending on whether the net effect of the horizontal forces on the members 81A, 81B is tractive (fig. 12A) or compressive (fig. 12B).

It should also be pondered that this embodiment allows longitudinal expansion and contraction of the beam when the weighing-machine is loaded, eliminating an important contribution to the horizontal forces. The most noteworthy feature of this embodiment, is that the two principal members 79A-81A and 79B-81B may move independently of each other in the longitudinal x-direction, and may only move together (i.e. integrally) in the vertical direction. In actual fact, from figures 11, 12A and 12B it can be seen that there is a small relative movement in the vertical direction, however it has been found that this does not affect the weight measurement, because the links 97 completely transmit (rather than absorb) the bending moment M due to the vertical forces $\bar{F}_Z$ which are the useful forces indicative of the load $\bar{Q}$. In general, the bending moment M generated by the load $\bar{Q}$ causes one of the links 97 to be subjected to traction and the remaining link 97 to compression, depending mainly on the longitudinal eccentricity of the load $\bar{Q}$ on the platform 17 (fig. 1). It can be seen that the stress applied by the bending moment M on the links 97 is considerably reduced, for which reason the plates 97 may be very thin, e.g. about 1/2 mm, to contribute to their flexibility in the longitudinal x-direction; whilst the flexible plates 79 must be thicker, e.g. about 3 mm, to efficiently support the load $\bar{Q}$. For a given load force $\bar{F}$ on a beam 77, the bending moment M at each end portion is F.a, and the force F acting on each plate 97 is given by the expression

$$f = \frac{F \cdot a}{b} \qquad\qquad (12)$$

where $\underline{b}$ is the longitudinal distance between both links 97A, 97B. If, e. g.,
a = 15 mm and b = 60 cm,
the reduction factor a/b is 40, so that for a load F of e.g. 80 kg, the plates 97 must be dimensioned to tolerate a force $\underline{f}$ of only 2 kg.

The engineering problem mentioned hereinbefore (page 5) arising with the coupling members is solved with the elastic compound beam structure 77, which structure may support far heavier loads $\bar{Q}$ without collapsing. as a result of the reducing effect of eq. (12). This equation is the key that allows thin linkage plates 97 to be used where thin coupling member plates 41' cannot be successfully used, to specifically avoid the friction forces $\bar{F}_U$ of eq. (4) and replacing them with the elasticity forces $\bar{F}_K$ of eq. (5). The essence of the present invention lies in that the elasticity coefficient $\underline{k}$ called for by eq. (5) is now a property of the compound beam 77. Hence, the horizontal forces $\bar{F}_H$ are lower in magnitude since kx $\ll$ $\mu$F (k is a function of the geometry whilst $\underline{\mu}$ depends on the materials, thus the former is generally easier to reduce than the latter), and practically do not subject the weight measurement to hysteresis.

A further embodiment of the present invention is described now with particularly reference to figures 13 and 14. These figures show a beam 125 for a weighing-machine having the combination of extensible beams 125 and rigid couplers 23; adequate for smaller weighing-machines in relation to the preceding embodiment, such as a weighing-machine for loads of 15 Kg. and beam span of (d=) 250 mm, For this smaller type of weighing-machine, it is somewhat impracticable to simply redimension the structure of the 25 beam illustrated in figure 8, because the T-section profiles 81 that strengthen the beam middle portion 83 have each their web 89 standing in the vertical xz-plane, resulting in an excessively tall weighing-machine. On the other hand, the beam 125 illustrated in figures 13 and 14 is substantially flatter in the vertical direction $z$, at the expense of an increase in the number of its component parts, and is thought for use in a weighing-machine of little height.

The beam 125 in figure 13 may be considered as split into two congruent half-beams formed by a pair of elongated plate members 129A, 129B connected by an elongated thin plate member 131 made of SAE 1070 steel. Each half-beam 129 comprises a respective tongue-plate 133A, 133B which abuts longitudinally outwards and which defines one respective end portion 25 for receiving the load and reactive forces $F_Q$, $F_R$, via the rigid couplers 23A, 23B (shown in fig. 8) respectively, and an inner portion 135 extending inside the beam middle portion 61 towards the middle plane $X_0$ of the beam 125.

Unlike the preceding embodiment illustrated in figures 8, this embodiment of the beam 125 of the present invention suggests that the strain-gauges 37A, 37B be located exactly across the middle plane $X_0$ of the beam 125, precisely at a middle zone 137.

A pair of outer zones 139A, 139B flanking the middle zone 137 containing the strain-gauges 37 may be defined on the plate 131. The plate 131 is most flexible at this middle zone 137, whilst its end zones 139 are made rigid against vertical forces by respective reinforcement plates 141A, 141B. The tongue-plates 133 and the reinforcement plate 141 are made of SAE 1010 steel and are each 30 mm wide by 3 mm thick, sufficiently so to be substantially inflexible insofar the load magnitudes in consideration. The reinforcements 141 do not cover the middle zone 137 of the thin plate 131 where the strain-gauges 37 are, and since the thickness of the thin plate 131 is only 1 mm, the flexibility of this middle zone 137 is substantially great; which flexibility may be enhanced by a pair of recesses 143 cut out to reduce the effective width $y_g$ of the thin plate 131. In this manner, the transversal section of the thin plate 131 at this point $X_0$ is reduced, and its flexibility increased, since the bending stress $\underline{Q}$ on each outermost fibre 67, 69 is given by the function

$$\sigma = \frac{M_0}{W} = \frac{M_0}{y_{go} \cdot z_g / 6} \qquad (13)$$

where W is the section-modulus of the section (at $X_0$), and $y_{go}$ and $z_g$ the width and height of the beam 125 at its middlemost section.

The reinforced members 131, 141 are located above the inner portion 135 of the pair of tongue-plates 133, and interconnected therewith by means of mobile links comprised by two sets of four strips 145A, 145B... 145H and four strip-holders 147A, 147B, 147C, 147D. The strips 145 are arranged in pairs 145A-145H,...145D-145E forming the 25 opposite sides rectangles 107A, 107B. The interconnection 145-147 allows only one degree of freedom of relative movement between the pair of tongue-plates 133 and the thin sheet 131 and, fundamentally, between the two tongue-plates 133A, 133B themselves, restricted to the longitudinal direction $x$, thus conveying longitudinal extensibility to the beam 125 as a function of the magnitude and distribution (or eccentricity) of the load $\bar{Q}$. The flexibility of the linkage strips 145 is what conveys the low elasticity coefficient k (eq. 5) to the compound beam structure 125, in accordance with the present invention.

The interconnecting mechanism with longitudinal displacement includes the four strip holders 147 made of SAE 1010 steel, 1 mm thick and 40 mm wide, i.e., wider than the plates 133, 141 so that they abut widthwise from the tongues 133 and the reinforcements 141 as may be clearly seen in figure 14. Furthermore, the plates 147 are bent into a longitudinal U-shape having a long web 149 and relatively short flanges 151. Two of the plates 147A, 147B are arranged over the reinforcements 141 and the other two remaining plates 147C, 147D below the tongues 133, as is clearly illustrated in the figure 13. The lower strip holders 147C, 147D are fixed to the inner portion 135 of the bottom face of each tongue-plate 133 by welded spots 153. In spite of that the upper strip holders 147A, 147B could also be spotwelded to the upper face of the reinforcements 141, it is preferred to use screws 155 to integrate three pieces: one upper strip holder 147, one reinforcement plate 141 and one outer zone 139 of the thin plate 131. This feature allows for the thin plate 131 with the strain-gauges 37 to be assembled last during the assembly process of the beam 125, to facilitate efficient adjustment.

The strips 145 are of SAE 1090 steel and are 1/2 mm thick only, to be very flexible. They are oriented in a vertical position in a plane transversal to the longitudinal axis $x$, and interconnect the tongue plates 133 with the reinforced plate 131-141 to convey to the entire beam 125 (except in the middle flexure zone 137) the combined features of rigidness in the vertical direction $z$ and extensibility in the longitudinal direction $x$. These features are schematically illustrated in figures 15A and 15B, which illustrate the relative positions of the (reinforced) thin plate 131, the tongue plates 133 and the strips 145 for two different load states.

The figure 15A is a schematic of the beam 125 in a state of nominal load, whilst the figure 15B is similar, but for a state near maximum load. Because the figure 15B corresponds to a state of greater flexure, it is necessary for the actual length of the beam 125 to increase so that the receiving edges 33, 35 maintain their vertical position $X_Q$, $X_R$ along the x-axis, due to that they are coupled to rigid members 23 (not illustrated in figures 13 to 15) as mentioned beforehand. The increase in the (arched) beam length is conveyed by the mechanical deformation of the strip 145, the elasticity of which is given by their small thickness as occurs with the link-pieces 97 of the compound beam 77 shown in figure 8. Equation (12) is also applicable in this embodiment, by virtue of which the relatively long length $\underline{b}$ of each half middle portion 127 causes the effect of the load Q on the strips 145 to be reduced by the factor a/b (where $\underline{a}$ is the lever-arm distance between the edges 33-35 and $\underline{b}$ the lever-arm distance between pairs of strips 145A-145H = 145B-145G = 145C-145F = 145D-145E), for which reason these strips 145 may be so thin.

In the case schematically shown in the figure 15B, the longitudinal forces $F_K$ are placing the beam 125 under tensile strain. Evidently, when the longitudinal forces $F_K$ act in the opposite direction, the beam 125 will be under compressive strain, and the strips 145 will bend the other way. The extensibility feature of the beam 125 not only compensates factors derived from load variation, but also others such as thermal expansion, which otherwise could be harmful, given the long length $\underline{d}$ of the beam 125 and the high precision desired.

Although the essential features of the invention have been brought out by means of a preferred embodiment, the invention is not limited to this embodiment and, on the contrary, extends to all alternative forms within the purview of the appended claims.

## Claims

1. A dynamometer machine for detecting the magnitude of a load (Q) applied thereto; and including: a frame (21); a platform (17) adapted to receive said load within a useful range of values; a pair of longitudinally elongated beam structures (77, 125) that bend under the effect of said load, each beam having a pair of end portions (25) and a middle portion (83); coupler means (23) for transmitting transverse forces ($FF_Q$, $FF_R$) dependent on the load, from said platform and said frame to each beam end portion, thereby applying bending moments ($M_x$) to each beam; and detector means (37) responsive to longitudinal deformation of the beam structures for measuring a parameter related to the bending moment ($M_0$) in said middle portion to derive said magnitude; characterized in that each beam structure is longitudinally extensible, so that the actual length of each beam structure may vary to compensate different bendings of said beam structure under the applied load.

2. The machine of claim 1, characterized in that each of said beam structures is a compound structure comprising two longitudinally movable members (81A, 81B; 133A, 133B), each of which is integral with a respective end portion (25) of the corresponding beam structure, and linkage means (97, 145-147) interconnecting said two members so that the two members substantially move integral with each other in the vertical direction (z) and independently of each other in the longitudinal direction (x).

3. The machine of claim 2, characterized in that said machine is a weighing-machine; and each of said movable members comprises a rigid horizontal member (81, 135) defining the beam middle portion and which is substantially parallel to the rigid member of the other movable member, and an end-plate (79, 25-133) fixed thereto and defining one of said end portions; and said linkage means comprise each a thin flexible strip plate (101, 145) articulated with said rigid members at opposite ends thereof and arranged as at least one pair forming the vertical opposite sides of a rectangle (107).

4. The machine of claim 3, characterized in that said coupler means comprise a plurality of substantially rigid coupling members (23, 41) in contact with said end portions and each fixed to either said frame or to said platform.

5. The machine of claim 3, characterized in that said detector means (37) comprise pairs of strain-gauges (37), wherein each strain-gauge of a pair is coupled to separate flexible portions spaced from each other symmetrically about a transversal middle plane ($X_0$) of a beam.

6. The machine of claim 3, characterized in that said rigid members overlap each other (fig. 8), the strip plates of said linkage means are each articulated with both the rigid members at opposite extremes thereof, and both the rigid members form the other pair of opposite sides of said rectangle; and each end plate further contains an inner flexible portion (75), said detector means comprising at least one strain-gauge operatively connected with each end-plate at said inner flexible portion thereof equidistant ($X_{SA}$, $X_{SB}$) from a transverse middle plane ($X_0$) of said beam structure.

7. The machine of claim 3, characterized in that said compound beam structure (Figs. 13, 14) is longitudinally symmetrical (129A, 129B) about a transverse middle plane ($X_0$) and comprises two rigid members (133A, 133B) coplanarly aligned with each other on either side of said middle plane; the beam structure further including a third horizontal plate member (131) parallel to said two members, said third member comprising a flexible middle zone (137) bridging said middle plane and two rigid outer zones (139A, 139B), the strip plates (145) of said linkage means connecting in articulated form each outer zone with respective ones of said rigid members in a manner defining two rectangles (107A, 107B), and said detector means comprise at least one strain-gauge operatively connected to the third plate member of each beam at said flexible middle zone thereof.

8. The machine of claim 3, characterized in that the longitudinal cross-section of each of said end portions (25) are inclined so that load and reactive forces ( $\bar{F}_Q$, $\bar{F}_R$) derived from the weight of said load are applied to each beam at substantially the same horizontal level.

9. The machine of claim 8, characterized in that the longitudinal cross-section of each of said end portions 10 are shaped so that load and reactive forces derived from the weight of said load are applied to each beam on a plane containing the neutral axis (n) of the beam.

10. For a dynamometer machine of claim 3, an extensible compound beam characterized by comprising a pair of elongated rigid members (81A, 81B), a pair of elongated end-plates (79A, 79B) and at least one pair of flexible link strips (97A, 97B) each end-plate being integrally fixed to a respective one of said rigid members to longitudinally project outwards therefrom, each of said flexible link strips respectively connects one of said rigid members with the other rigid member so that both 25 said rigid members may move longitudinally with respect to each other but cannot substantially move independently from each other in a transverse direction, thereby conveying longitudinal elasticity to said beam.

**Patentansprüche**

1. Kraftmeßvorrichtung zum Feststellen der Größe einer Last (Q), die aufliegt, und welche aufweist: einen Rahmen (21), eine Plattform (17), die derart ausgelegt ist, daß sie innerhalb eines zweckmäßigen Wertebereiches eine Last aufnimmt, ein Paar von in Längsrichtung länglich ausgebildeten Balkenkonstruktionen (77, 125), die sich unter der Einwirkung der Last biegen, wobei jeder Balken ein Paar von Endabschnitten (25) und einen Mittelabschnitt (83) hat, Verbindungseinrichtungen (23) zur Übertragung der Querkräfte ( $\bar{F}_Q$, $\bar{F}_R$) in Abhängigkeit von der Last von der Plattform und dem Gestell zu dem Balkenendabschnitt, wodurch Biegemomente ($M_x$) an jeden Balken angelegt werden, und eine Detektoreinrichtung (37), die auf die Längsdeformation der Balkenkonstruktion zur Messung eines Parameters anspricht, der dem Biegemoment ($M_0$) im Mittelabschnitt zugeordnet ist, um diese Größe abzuleiten, dadurch gekennzeichnet, daß jede Balkenkonstruktion in Längsrichtung dehnbar ist, so daß die tatsächliche Länge jeder Balkenkonstruktion sich ändern kann, um unterschiedliche Biegungen der Balkenkonstruktion unter der einwirkenden Belastung zu kompensieren.

2. Vorrichtung nach Anspruch 1, dadurch gekennzeichnet, daß jede Balkenkonstruktion eine Verbundkonstruktion ist, die zwei in Längsrichtung bewegliche Teile (81A, 81B; 133A, 133B) aufweist, von denen jedes einteilig mit einem zugeordneten Endabschnitt (25) der zugeordneten Balkenkonstruktion verbunden ist, und Verbindungseinrichtungen (97, 145-147) aufweist, welche die beiden Teile derart verbinden, daß die beiden Teile sich im wesentlichen miteinander integral in vertikaler Richtung (z) bewegen und sich unabhängig voneinander in Längsrichtung (x) bewegen.

3. Vorrichtung nach Anspruch 2, dadurch gekennzeichnet, daß die Vorrichtung eine Waage ist, und daß jedes bewegliche Teil ein starres horizontales Teil (81, 135) aufweist, das den Balkenmittelabschnitt bildet, das im wesentlichen parallel zu dem starren Teil des anderen beweglichen Teils ist, das eine Endplatte (79, 25-133) daran befestigt ist und einen der Endabschnitte bildet, und daß die Verbindungseinrichtung jeweils eine dünne, flexible Streifenplatte (101, 145) aufweist, die gelenkig mit dem starren Teil an gegenüberliegenden Enden derselben verbunden sind und derart ausgelegt sind, daß wenigstens ein Paar derselben die vertikalen gegenüberliegenden Seiten eines Rechtecks (107) bilden.

4. Vorrichtung nach Anspruch 3, dadurch gekennzeichnet, daß die Verbindungseinrichtung eine Mehrzahl von im wesentlichen starren Verbindungsteilen (23, 41) aufweist, die in Kontakt mit den Endabschnitten sind, und die jeweils entweder am Gestell oder an der Plattform befestigt sind.

5. Vorrichtung nach Anspruch 3, dadurch gekennzeichnet, daß die Detektoreinrichtung (37) ein Paar von Dehnungsmeßstreifen (37) aufweist, wobei jeder Dehnungsmeßstreifen eines Paars mit den gesonderten flexiblen Abschnitten verbunden ist, die voneinander symmetrisch um eine Quermittelebene ($X_0$) eines Balkens angeordnet sind.

6. Vorrichtung nach Anspruch 3, dadurch gekennzeichnet, daß die starren Teile einander überlappen (Fig. 8), die Streifenplatten der Verbindungseinrichtungen jeweils mit den beiden starren Teilen an den gegenüberliegenden Enden derselben gelenkig verbunden sind und beide starren Teile das andere Paar von gegenüberliegenden Seiten des Rechtecks bildet, und daß jede Endplatte ferner einen inneren flexiblen Abschnitt (75) enthält, wobei die Detektoreinrichtung wenigstens einen Dehnungsmeßstreifen aufweist, der betriebsmäßig mit der jeweiligen Endplatte an dem inneren flexiblen Abschnitt derselben equidistant ($X_{SA}$, $X_{SB}$) von der Quermittelebene ($X_0$) der beiden Konstruktionen verbunden ist.

7. Vorrichtung nach Anspruch 3, dadurch gekennzeichnet, daß die Verbundbalkenkonstruktion (Fig. 13, 14), in Längsrichtung um eine Quermittelebene ($X_0$) symmetrisch (129A, 129B, ausgelegt ist und zwei starre Teile (133A, 133B) aufweist, die koplanar zueinander auf jeder Seite der Mittelebene ausgerichtet sind, daß die beiden Konstruktionen ferner ein drittes horizontales Plattenteil (131) enthält, das parallel zu den beiden Teilen ist, wobei das dritte Teil eine flexible Mittelzone (137) aufweist, die die Mittelebene überbrückt, und zwei starre äußere Zonen (139A, 139B), das die Streifenplatten (145) der Verbin-

EP 0 175 543 B1

dungseinrichtungen in gelenkiger Weise die jeweilige äussere Zone mit dem jeweils zugeordneten starren Teil derart verbindet, daß zwei Vierecke (107A, 107B) gebildet werden, und daß die Detektoreinrichtung wenigstens einen Dehnungsmeßstreifen aufweist, der betriebsmäßig mit dem dritten Plattenteil des Balkens an der flexiblen Mittelzone hiervon verbunden ist.

8. Vorrichtung nach Anspruch 3, dadurch gekennzeichnet, daß der Längsquerschnitt jedes Endabschnitts (25) derart geneigt ist, daß die Belastungs- und Reaktionskrfte ( $\bar{F}_Q$, $\bar{F}_R$), die von dem Gewicht der Last herrühren, auf jeden Balken etwa in derselben horizontalen Höhe einwirken.

9. Vorrichtung nach Anspruch 8, dadurch gekennzeichnet, daß der Längsquerschnitt jeder der Endabschnitte derart geformt ist, daß die Belastungs- und Reaktionskräfte, die von dem Gewicht der Last herrühren, an jedem Balken in einer Ebene einwirken, die die neutrale Achse (n) des Balkens enthält.

10. Für eine Kraftmeßvorrichtung nach Anspruch 3 zeichnet sich ein dehnbarer Verbundbalken dadurch aus, daß er ein Paar von länglichen starren Teilen (81A, 81B), ein Paar von länglichen Endplatten (79A, 79B) und wenigstens ein Paar von flexiblen Verbindungsstreifen (97A, 97B) aufweist, daß jede Endplatte einteilig fest mit einem zugeordneten Teil der starren Teile verbunden ist, wobei es in Längsrichtung von diesen nach außen vorsteht, und da jeder flexible Verbindungsstreifen jeweils eines der starren Teile mit dem anderen starren Teil verbindet, so daß beide starren Teile sich in Längsrichtung bezüglich einander, aber im wesentlichen unabhängig voneinander in einer Querrichtung bewegen können, wodurch dem Balken eine Längselastizität verliehen wird.

**Revendications**

1. Une machine dynamométrique pour détecter l'amplitude d'une charge (Q) qui lui est appliquée; et comprenant: un cadre (21); une plateforme (17) apte à recevoir ladite charge dans une plage utile de valeurs; une paire de structures de fléaux allongées longitudinalement (77, 125) qui plie sous l'effet de ladite charge, chaque fléau comportant une paire de parties d'extrémité (25) et une partie médiane (83); des moyens de couplage (23) pour transmettre des forces transversales ($F_Q$, $F_R$) qui dépendent de la charge, à partir de ladite plateforme et dudit cadre vers chaque partie d'extrémité de fléau, en appliquant ainsi des moments de flexion ($M_X$) à chaque fléau; et des moyens détecteurs (37) sensibles à une déformation longitudinale des structures de fléaux pour mesurer un paramètre relié au moment de flexion ($M_0$) dans ladite partie médiane pour dériver ladite amplitude; caractérisée en ce que chaque structure de fléau est longitudinalement extensible de sorte que la longueur réelle de chaque structure de fléau peut varier pour compenser des flexions différentes de ladite structure de fléau sous la charge appliquée.

2. Machine selon la revendication 1, caractérisée en ce que chacune desdites structures de fléaux est une structure composée comprenant deux organes mobiles longitudinalement (81A, 81B; 133A, 133B), dont chacun est d'un seul tenant avec une partie d'extrémité respective (25) de la structure de fléau correspondante, et des moyens de liaison (97, 145–147) reliant les dits deux organes de sorte que les deux organes se déplacent sensiblement d'un seul tenant l'un avec l'autre dans la direction verticale (z) et indépendamment l'un de l'autre dans la direction longitudinale (x).

3. Machine selon la revendication 2, caractérisée en ce que ladite machine est une bascule; et en ce que chacun desdits organes mobiles comprend un organe horizontal rigide (81, 135) définissant la partie médiane de fléau et qui est sensiblement parallèle à l'organe rigide de l'autre organe mobile, et une plaque d'extrémité (79, 25–133) qui est fixée sur celui-ci et qui définit l'une desdite parties d'extrémité; et en ce que lesdits moyens de liaison comprennent chacun une fine plaque flexible en bande (101, 145) articulée avec lesdits organes rigides à des extrémités opposées de ceux-ci et disposée au moins en une paire formant les côtés opposés verticaux d'un rectangle (107).

4. Machine selon la revendication 3, caractérisée en ce que lesdits moyens de couplage comprennent plusieurs organes de couplage sensiblement rigides (23, 41) en contact avec les dites parties d'extrémités et fixés chacun soit au dit cadre soit à ladite plateforme.

5. Machine selon la revendication 3, caractérisée en ce que lesdits moyens détecteurs (37) comprennent des paires de jauges de contraintes (37), dans laquelle chaque jauge de contrainte d'une paire est couplée à des parties flexibles séparées distantes l'une de l'autre symétriquement par rapport à un plan médian transversal ($X_0$) d'un fléau.

6. Machine selon la revendication 3, caractérisée en ce que lesdits organes rigides se recouvrent l'un l'autre (fig. 8), en ce que les plaques en bande desdits moyens de liaison sont chacun articulés avec les deux organes rigides à des extrémités opposées de ceux-ci, et en ce que lesdits deux organes rigides forment l'autre paire de côté opposé dudit rectangle; et en ce que chaque plaque d'extrémité contient de plus une partie flexible intérieure (75), lesdits moyens détecteurs comprenant au moins une jauge de contrainte reliée en fonctionnement avec chaque plaque d'extrémité à ladite partie flexible intérieure de celle-ci équidistante ($X_{SA}$, $X_{SE}$) d'un plan médian transversal ($X_0$) de ladite structure de fléau.

7. Machine selon la revendication 3, caractérisée en ce que ladite structure composée de fléau (Figs. 13, 14) est longitudinalement symétrique (129A, 129B) par rapport à un plan transversal médian ($X_0$) et comprend deux organes rigides (133A, 133B) alignés de façon coplanaire l'un avec l'autre de chaque côté du dit plan médian; la structure de fléau comprenant de plus un troisième de plus un troisième organe de plaque horizontale (131) parallèle auxdits deux organes, ledit troisième organe comprenant une zone médiane flexible (137) qui franchit le dit plan médian et deux zones extérieures rigides (139A, 139B), les plaques en bandes (145) desdits moyens de liaison reliant dans une forme articulée chaque zone extérieure avec les organes respectifs parmi lesdits organes rigides d'une manière définissant deux rectangles (107A, 107B), et en ce que lesdits moyens détecteurs comprennent au moins une jauge de contrainte reliée fonctionnellement au troisième organe en plaque de chaque fléau à ladite zone médiane flexible de celui-ci.

8. Machine selon la revendication 3, caractérisée en ce que la coupe longitudinale de chacune de dites parties d'extrémité (25) est inclinée de façon que la charge et les forces réactives ($F_Q$, $F_R$) dérivées du poids de ladite charge sont appliquées à chaque fléau sensiblement au même niveau horizontal.

9. Machine selon revendication 8, caractérisée en ce que la coupe longitudinale de chacune des dites parties d'extrémité est formée de façon telle que la charge et les forces réactives dérivées du poids de ladite charge sont appliquées à chaque fléau sur un plan contenant l'axe neutre ($n$) du fléau.

10. Dans une machine dynamométrique selon la revendication 3, un fléau composé extensible caractérisé en ce qu'il comprend une paire d'organes rigides allongés (81A, 81B), une paire de plaques d'extrémités allongées (79A, 79B), et au moins une paire de bandes flexibles de liaison (97A, 97B), chaque plaque d'extrémité étant fixée d'un seul tenant à un organe respectif parmi les dix organes rigides pour se projeter longitudinalement vers l'extérieur à partir de ceux-ci, en ce que chacune des dites bandes flexibles de liaison relie respectivement l'un desdits organes rigides avec l'autre organe rigide de sorte que lesdits deux organes rigides peuvent se déplacer longitudinalement l'un par rapport à l'autre mais ne peuvent sensiblement pas se déplacer indépendamment l'un de l'autre dans une direction transversale, ce qui confère une élasticité longitudinale audit fléau.

FIG_1

FIG_2
(PRIOR ART)

FIG_3A

FIG_3B

FIG_4A

FIG_4B

FIG_5A

FIG_5B

FIG_6A

FIG_6B

FIG.8

FIG.7

EP 0 175 543 B1

FIG.10

FIG.9

FIG.11

FIG.12A

FIG.12B

FIG.13

FIG.14

FIG.15A

FIG.15B

EP 0 175 543 B1